# DEMANDE DE BREVET EUROPEEN

(11) **EP 0 761 359 A1**
(43) Date de publication de la demande: **12.03.1997**
(21) Numéro de dépôt: 96401853.5
(22) Date de dépôt: 29.08.1996
(51) Int. Cl.: B23H 7/02

(54) **Outillage pour une machine d'usinage par électro-érosion**

(30) Priorité: 01.09.1995 FR 9510307
(71) Demandeur: ALCATEL CIT, 75008 Paris (FR)
(72) Inventeur: Comperat, Jean Robert, 74410 Duingt (FR); Perillat-Amede, Denis, 75006 Paris (FR)
(74) Mandataire: Gosse, Michel

(57) **Abrégé**

Outillage pour une machine d'usinage par électro-érosion à électrode à fil (1), tendu entre une sortie (2) d'une tête dévideuse (3) de fil (1) et une entrée (4) dans une embase réceptrice (5) assurant le rembobinage du fil, caractérisé en ce que ledit outillage, situé entre ladite sortie (2) et ladite entrée (4) comprend des moyens de renvoi (6 à 11) du fil de façon à lui donner une trajectoire comportant une portion rectiligne (1A) entre deux points (25, 26) situés dans un plan parallèle à la ligne (Δ) joignant ladite sortie et ladite entrée et séparé d'une distance d de cette ligne, et en ce qu'il comporte des moyens pour déplacer ces points dans ce plan selon une direction Y parallèle à ladite ligne et une direction X perpendiculaire à ladite ligne.

## Description

L'invention concerne un outillage pour une machine d'usinage par électro-érosion à électrode à fil.

Dans une telle machine, le fil électrode, qui effectue la découpe, est tendu verticalement entre une tête dévideuse de fil comportant une buse de sortie et, en extrémité inférieure, un dispositif assurant l'enroulement du fil.

Ce parcours rectiligne du fil ne permet pas d'exécuter certains usinages, en particulier des pièces pour lesquelles une découpe ne doit pas être exécutée en la traversant rectilignement de part en part. C'est le cas par exemple si l'on veut exécuter l'usinage d'un rotor de pompe à vide turbomoléculaire à ailettes comportant plusieurs étages d'ailettes. Un tel usinage n'est possible que si le rotor est constitué d'un empilage d'une pluralité de disques, mais il est impossible de tailler plusieurs étages d'ailettes dans la masse et donc d'effectuer par ce procédé un rotor monobloc.

La présente invention a pour but de rendre possible une telle opération.

L'invention a ainsi pour objet un outillage pour une machine d'usinage par électro-érosion à électrode à fil, tendu entre une sortie d'une tête dévideuse de fil et une entrée dans une embase réceptrice assurant le rembobinage du fil, caractérisé en ce que ledit outillage, situé entre ladite sortie et ladite entrée comprend des moyens de renvoi du fil de façon à lui donner une trajectoire comportant une portion rectiligne entre deux points situés dans un plan parallèle à la ligne joignant ladite sortie et ladite entrée et séparé d'une distance d de cette ligne, et en ce qu'il comporte des moyens pour déplacer ces points dans ce plan selon une direction Y parallèle à ladite ligne et une direction X perpendiculaire à ladite ligne.

Selon une réalisation particulière, l'outillage comprend un guide vertical lié à la tête dévideuse, une première poulie de renvoi liée au guide vertical, au voisinage de la sortie de la tête, une deuxième poulie de renvoi liée au guide vertical, au voisinage de ladite entrée dans ladite embase, un premier guide horizontal monté sur le guide vertical et réglable en position le long du guide vertical selon la direction Y, un deuxième guide horizontal monté sur le guide vertical et réglable en position le long du guide vertical selon la direction Y, le premier guide horizontal et le deuxième guide horizontal portant chacun un coulisseau mobile selon la direction X et portant chacun un bras perpendiculaire audit guide vertical, chaque guide horizontal portant en outre une troisième poulie de renvoi, ledit fil passant successivement sur la première poulie de renvoi, sur l'une des deux troisièmes poulies de renvoi, sur l'extrémité de l'un des deux bras, sur l'extrémité de l'autre bras, sur l'autre troisième poulie de renvoi et sur la deuxième poulie de renvoi.

On va maintenant donner la description d'un exemple de mise en oeuvre de l'invention en se référant au dessin annexé dans lequel :

La figure 1 montre schématiquement un fil tendu entre une tête dévideuse et une embase de rembobinage d'une machine d'usinage par électro-érosion à électrode à fil tendu selon l'art antérieur.

La figure 2 est une vue schématique montrant le parcours du fil tendu entre la tête dévideuse et l'embase de rembobinage obtenu par l'outillage selon l'invention dont le principe est figuré sur la figure.

La figure 3 montre un exemple de réalisation concrète d'un outillage permettant d'obtenir le parcours du fil, représenté figure 2.

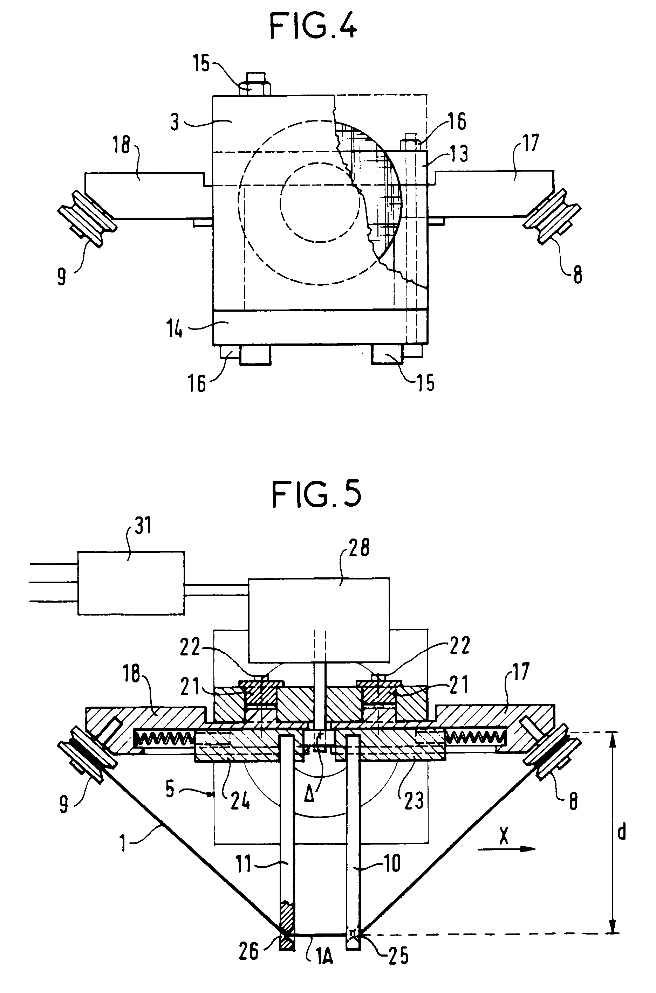

La figure 4 est une vue selon la flèche IV de la figure 3 avec arrachement partiel.

La figure 5 est une vue en coupe selon V-V de la figure 3.

La figure 6 est une vue en perspective montrant la pièce de liaison de l'outillage à la tête dévideuse.

La figure 7 est une vue en coupe partielle selon VII-VII de la figure 3.

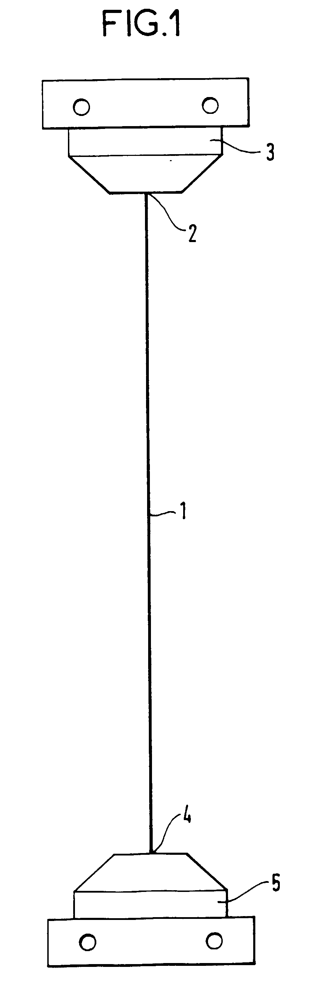

La figure 1 montre ainsi l'état de l'art antérieur : le fil 1 d'usinage par électro-érosion défile et est tendu en ligne droite entre une buse de sortie 2 d'une tête dévideuse 3 de fil et une entrée 4 dans une embase 5 assurant le rembobinage du fil.

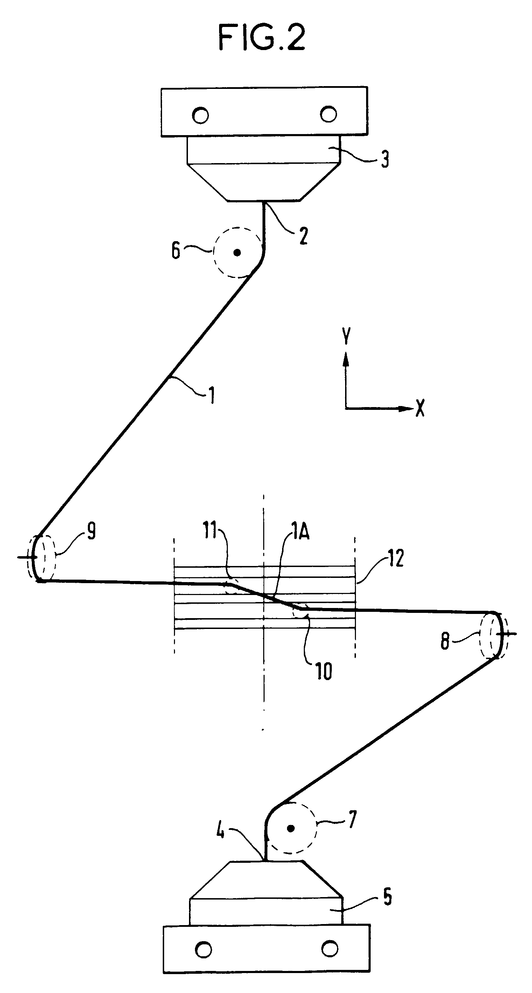

La figure 2 montre, dans le cas de l'invention, le parcours du fil 1 entre la tête dévideuse 3 et l'embase 5. Ce parcours est obtenu par un outillage venant se fixer sur la tête 3. Il comporte une petite portion rectiligne 1A qui constitue la partie utilisée du parcours pour effectuer un usinage.

Cette figure schématise les organes essentiels de l'outillage adapté à la machine permettant d'obtenir ce circuit pour le fil 1. Il s'agit d'une première poulie de renvoi 6, d'une deuxième poulie de renvoi 7, de deux troisièmes poulies de renvoi 8 et 9 et de deux bras 10 et 11.

Sur cette figure, on a figuré en traits fins une pièce à usiner 12. Il s'agit par exemple d'un rotor de pompe turbomoléculaire. On voit que, grâce à l'invention, il est possible d'usiner les ailettes de tous les étages dans un seul bloc, ce qui est impossible si le fil 1 est rectiligne entre la tête 3 et l'embase 5.

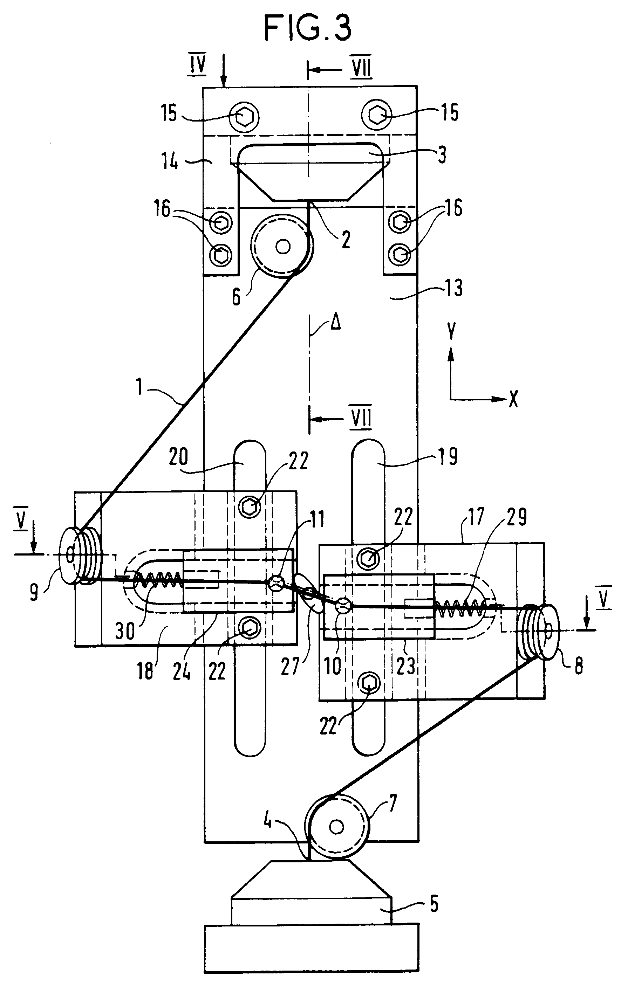

En se reportant maintenant aux figures 3 et suivantes, on va décrire une réalisation particulière d'un outillage selon l'invention.

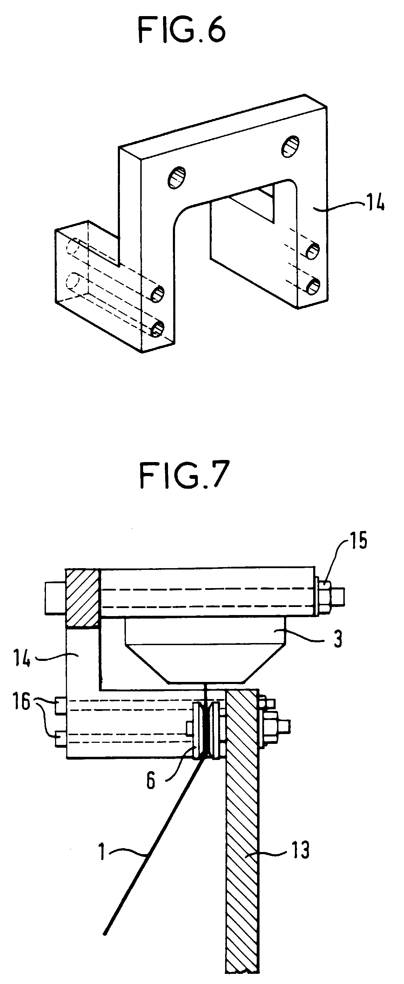

Il comprend un guide vertical 13, constituant une plaque rectangulaire, fixé à la tête 3 par l'intermédiaire d'une pièce de liaison 14 représentée en perspective figure 6. La pièce de liaison 14 est fixée à la tête 3 par des boulons 15 et le guide vertical 13 à la pièce de liaison 14 par des boulons 16.

A ce guide vertical 13 sont fixées la première poulie de renvoi 6, au voisinage de la sortie 2 de l'embase 3, et la deuxième poulie de renvoi 7 au voisinage de l'entrée 4 de l'embase 5. Sur le guide vertical 13 sont en outre montés un premier guide horizontal 17 et un deuxième guide horizontal 18. Ces deux guides sont réglables en position le long du guide vertical 13 grâce à deux lumières-glissières 19 et 20. Les guides sont immobilisés dans leur position, chacun, par une pièce de serrage 21 et deux vis-écrous 22. Les lumières 19, 20 sont orientées selon une direction Y parallèlement à une ligne Δ joignant la sortie 2 à l'entrée 4 dans l'embase 5 de rembobinage. Sur chaque guide horizontal est monté un coulisseau respectivement 23 et 24. Chaque coulisseau est mobile selon une direction X perpendiculaire à Y. Les bras 10 et 11 sont montés respectivement sur les coulisseaux 23 et 24. L'extrémité de chaque bras est équipé d'un canon de passage du fil 1, ou percé d'un simple trou, respectivement 25 et 26, déterminant deux points de passage du fil 1, situés dans un plan parallèle à Δ (parallèle au plan du guide vertical 13) et à une distance d de Δ. Une came 27, montée sur la plaque 13 et entraînée en rotation par un moteur pas à pas 28, assure le déplacement simultané des coulisseaux 23 et 24 dans le sens de leur écartement tandis qu'un ressort de rappel, respectivement 29 et 30, assure leur déplacement en sens inverse. Le moteur 28 est commandé par un dispositif d'asservissement 31.

Ainsi, les points de passage 25 et 26 du fil 1 peuvent se déplacer dans un plan parallèle à l'axe Δ, situé à une distance d de cet axe, selon les deux directions perpendiculaires indiquées : X et Y, permettant à la partie active 1A du fil 1 d'être orientée selon les besoins de la coupe à effectuer et d'avoir une longueur plus ou moins grande. En outre, cette partie active 1A est située en avant à une distance d de l'axe Δ de la machine. Enfin, chaque guide horizontal 17, 18 porte une troisième poulie de renvoi : respectivement 8 et 9.

Le fil 1 passe ainsi successivement sur la poulie 6, sur la poulie 9, au point 26 à l'extrémité du bras 11, au point 25 à l'extrémité du bras 10, sur la poulie 8, et sur la poulie 7 avant de rentrer en 4 dans l'embase 5.

On comprend qu'avec une telle portion active 1A du fil 1, orientable et en position avancée par rapport à l'axe Δ on puisse exécuter des découpes impossibles à réaliser avec une machine comme celle de la figure 1 ne comportant pas l'outillage de l'invention.

## Revendications

1. Outillage pour une machine d'usinage par électro-érosion à électrode à fil (1), tendu entre une sortie (2) d'une tête dévideuse (3) de fil (1) et une entrée (4) dans une embase réceptrice (5) assurant le rembobinage du fil, caractérisé en ce que ledit outillage, situé entre ladite sortie (2) et ladite entrée (4) comprend des moyens de renvoi (6 à 11) du fil de façon à lui donner une trajectoire comportant une portion rectiligne (1A) entre deux points (25, 26) situés dans un plan parallèle à la ligne (Δ) joignant ladite sortie et ladite entrée et séparé d'une distance d de cette ligne, et en ce qu'il comporte des moyens pour déplacer ces points dans ce plan selon une direction Y parallèle à ladite ligne et une direction X perpendiculaire à ladite ligne.

2. Outillage selon la revendication 1, caractérisé en ce qu'il comprend un guide vertical (13) lié à la tête dévideuse (3), une première poulie de renvoi (6) liée au guide vertical (13), au voisinage de la sortie (2) de la tête, une deuxième poulie de renvoi (7), liée au guide vertical (13), au voisinage de ladite entrée (4) dans ladite embase (5), un premier guide horizontal (17) monté sur le guide vertical (13) et réglable en position le long du guide vertical selon la direction Y, un deuxième guide horizontal (18) monté sur le guide vertical (13) et réglable en position le long du guide vertical, selon la direction Y, le premier guide horizontal (17) et le deuxième guide horizontal (18) portant chacun un coulisseau (23, 24) mobile selon la direction X et portant chacun un bras (10, 11) perpendiculaire audit guide vertical (13), chaque guide horizontal (17, 18) portant en outre une troisième poulie de renvoi (8, 9), ledit fil (1) passant successivement sur la première poulie de renvoi (6), sur l'une (9) des deux (8, 9) troisièmes poulies de renvoi, sur l'extrémité (26) de l'un (11) des deux bras (10, 11), sur l'extrémité (25) de l'autre bras (10), sur l'autre (8) troisième poulie de renvoi et sur la deuxième poulie de renvoi (7).
